# EUROPEAN PATENT APPLICATION

(11) **EP 3 254 960 A1**
(43) Date of publication of application: **13.12.2017**
(21) Application number: 17175222.3
(22) Date of filing: 09.06.2017
(51) Int. Cl.: B64C 13/50, G05D 1/00

(54) **ELECTRICAL ARCHITECTURE FOR SLAT/FLAP CONTROL USING SMART SENSORS AND EFFECTORS**

(30) Priority: 10.06.2016 IN 201641019969
(71) Applicant: Goodrich Aerospace Services Private Limited, 560048 Bengaluru (IN)
(72) Inventor: BAPAT, Shardul Shrinivas, 560048 Bengaluru, Karnataka (IN); MUHAMMED, Shihab T.A., 682022 Ernakulam, Kerala (IN); CHITIRALA, Pradeep, 560016 Bengaluru, Karnataka (IN)
(74) Representative: Bridge, Kerry Ann

(57) **Abstract**

A centralized control system (400) and/or method (600) for controlling an aircraft are provided. The centralized control system (400) includes a controller (411) configured to receive a device signal and transmit a control signal, a communication bus (422, 423) connected to the controller being configured to transport the device signal and the control signal, a plurality of devices connected to the controller (411) using the communication bus, wherein at least one of the plurality of devices includes at least one of a sensor (234, 235, 236, 237) being configured to collect the device signal and an effector configured to respond to the control signal, and a bus communication circuit configured to communicate over the communication bus to the controller.

## Description

### BACKGROUND

The subject matter disclosed herein generally relates to electrical architecture in an aircraft and, more particularly, to electrical architecture for slat/flap control using sensors and effectors.

Modem aircraft include a number of sensors and effectors that are arranged at many different points in and around the aircraft. These sensors and effectors may be configured to collect aircraft data, control aircraft components based on the collected data, and/or implement a user request for controlling the aircraft.

For example, modem aircraft utilize a plurality of sensors and effectors to control different surfaces of an aircraft. Particularly, flaps and slats are aircraft secondary control surfaces which influence the lift and drag of the aircraft that can be controlled using actuators with associated sensors and effectors. Typically, there are multiple such surfaces on each wing of the aircraft. Therefore, there are multiple sensors and effectors that are each individually wired to a corresponding centralized controller located elsewhere. Often a significant distance exists between the sensors/effectors and the controllers located elsewhere in the airframe.

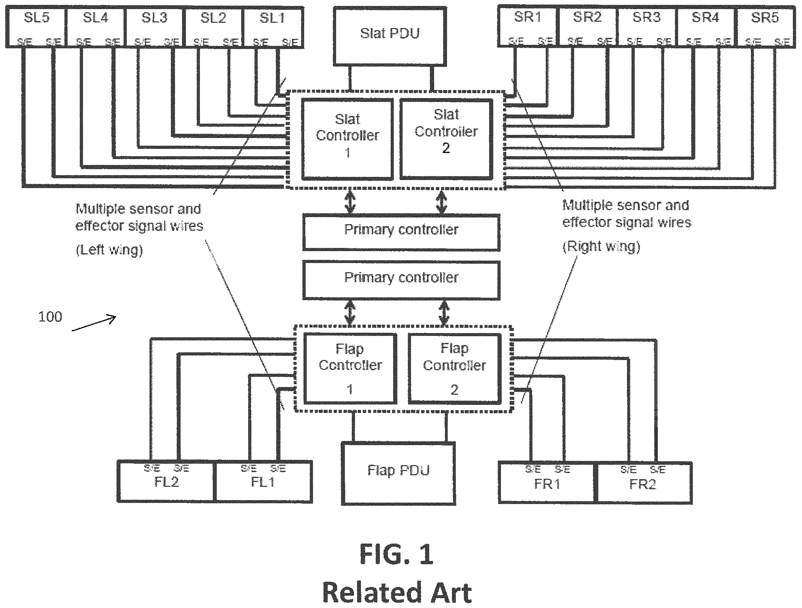

For example, as shown in FIG. 1, a block diagram of a slat/flap control system 100 is shown. The slat/flap control system 100 includes a slat power drive unit (PDU) that is connected to a slat controller 1 and a slat controller 2. These controllers are both connected to a plurality of devices that are positioned for controlling surfaces of the aircraft. For example, the slat controller 1 and slat controller 2 are connected to slats on the left and right wings SL1-SL5 and SR1-SR5. As shown each element has a completely separate connection to the controllers. These harnessing cables can be long because they can run all the way to the front of an aircraft. According to another embodiment, the harnessing cables can be long because they run from the fuselage to the control surfaces located on the wings. Further, the slat/flap control system 100 includes flap controller 1 and flap controller 2 that are connected to a flap PDU and flaps on the left and right wings of the aircraft FL1, FL2, FR1, and FR2. These flaps are similarly connected with independent cabling back to the controllers. Further, both the slat controllers and the flap controllers are connected to primary controllers.

Therefore, such an arrangement includes many long wires being run long distances within the aircraft which can increase the overall weight and material cost of the aircraft. Also, the reliability of this type of architecture is dependent on the individual wiring between each sensor/effector and the respective controller and the individual wiring's ability to deliver the signals between the components. Accordingly, there is a need to provide a system and method for improving the wiring requirements between aircraft elements.

### BRIEF DESCRIPTION

According to one embodiment a centralized control system for controlling an aircraft is provided. The centralized control system includes a controller configured to receive a device signal and transmit a control signal, a communication bus connected to the controller being configured to transport the device signal and the control signal, a plurality of devices connected to the controller using the communication bus, wherein at least one of the plurality of devices includes at least one of a sensor being configured to collect the device signal and an effector configured to respond to the control signal, and a bus communication circuit configured to communicate over the communication bus to the controller.

In addition to one or more of the features described above, or as an alternative, further embodiments may include, the controller that further includes a slat controller configured to control the plurality of devices that are connected to a plurality of slats, a flap controller configured to control the plurality of devices that are connected to a plurality of flaps, and a primary controller configured to receive user control signals for controlling the aircraft.

In addition to one or more of the features described above, or as an alternative, further embodiments may include, the controller that further includes a first slat controller configured to control the plurality of devices that are connected to a plurality of slats on the left side of the aircraft, a first flap controller configured to control the plurality of devices that are connected to a plurality of flaps on the left side of the aircraft, a second slat controller configured to control the plurality of devices that are connected to a plurality of slats on the right side of the aircraft, a second flap controller configured to control the plurality of devices that are connected to a plurality of flaps on the right side of the aircraft, and a primary controller configured to receive user control signals for controlling the aircraft.

In addition to one or more of the features described above, or as an alternative, further embodiments may include, wherein the communication bus is connected to the slats on the right side of the aircraft, and wherein the centralized control system further includes a second communication bus connected to the plurality of devices connected to the slats on the left side of the aircraft, a third communication bus connected to the plurality of devices connected to flaps on the right side of the aircraft, and a fourth communication bus connected to the plurality of devices connected to flaps on the left side of the aircraft.

In addition to one or more of the features described above, or as an alternative, further embodiments may include a redundant communication bus connected to the slats on the right side of the aircraft, a second redundant communication bus connected to the plurality of devices connected to the slats on the left side of the aircraft, a third redundant communication bus connected to the plurality of devices connected to flaps on the right side of the aircraft, and a fourth redundant communication bus connected to the plurality of devices connected to flaps on the left side of the aircraft.

In addition to one or more of the features described above, or as an alternative, further embodiments may include, wherein the bus communication circuit of the at least one of the plurality of devices further includes a communication interface configured to interface with the communication bus directly, a signal conditioning circuit configured to process signals between the communication bus and the at least one of a sensor and effector, a power conditioning circuit connected to a power source and configured to draw power to power the buss communication circuit, and a processor communicatively connected to and configured to control the communication interface, signal conditioning circuit, and power conditioning circuit.

In addition to one or more of the features described above, or as an alternative, further embodiments may include, a power distribution device including a left power line that is connected to the plurality of devices connected to flaps and slats on the left side of the aircraft, and a right power line that is connected to the plurality of devices connected to flaps and slats on the right side of the aircraft.

In addition to one or more of the features described above, or as an alternative, further embodiments may include, the power distribution device further including a redundant left power line that is connected to the plurality of devices connected to flaps and slats on the left side of the aircraft, and a redundant right power line that is connected to the plurality of devices connected to flaps and slats on the right side of the aircraft.

In addition to one or more of the features described above, or as an alternative, further embodiments may include, a slat power drive unit (PDU) communicatively connected to the controller, and a flap PDU communicatively connected to the controller.

In addition to one or more of the features described above, or as an alternative, further embodiments may include, wherein the primary controller is split between a front primary controller and a back primary controller, wherein the front primary controller is configured to receive user control signals for controlling the slats and the plurality of devices connected to the slats, and wherein the back primary controller is configured to receive user control signals for controlling the flaps and the plurality of devices connected to the flaps.

According to one embodiment a method of implementing a centralized control system for controlling an aircraft is provided. The method includes receiving, using a controller, a device signal and transmitting a control signal using the controller, transporting, using a communication bus connected to the controller, the device signal and the control signal, connecting a plurality of devices to the controller using the communication bus, collecting, using a sensor in the at least one of the plurality of devices, the device signal, responding to the control signal using an effector, and communicating, using a bus communication circuit in the at least one of the plurality of devices, the device signal and the control signal over the communication bus.

In addition to one or more of the features described above, or as an alternative, further embodiments may include, controlling, using a slat controller the plurality of devices that are connected to a plurality of slats, controlling, using a flap controller, the plurality of devices that are connected to a plurality of flaps, and receiving, using a primary controller, user control signals for controlling the aircraft.

In addition to one or more of the features described above, or as an alternative, further embodiments may include controlling, using a first slat controller, the plurality of devices that are connected to a plurality of slats on the left side of the aircraft, controlling, using a first flap controller, the plurality of devices that are connected to a plurality of flaps on the left side of the aircraft, controlling, using a second slat controller, the plurality of devices that are connected to a plurality of slats on the right side of the aircraft, controlling, using a second flap controller, the plurality of devices that are connected to a plurality of flaps on the right side of the aircraft, and receiving, using a primary controller, user control signals for controlling the aircraft.

In addition to one or more of the features described above, or as an alternative, further embodiments may include connecting the communication bus to the slats on the right side of the aircraft, connecting a second communication bus to the plurality of devices connected to the slats on the left side of the aircraft, connecting a third communication bus to the plurality of devices connected to flaps on the right side of the aircraft, and connecting a fourth communication bus to the plurality of devices connected to flaps on the left side of the aircraft.

In addition to one or more of the features described above, or as an alternative, further embodiments may include connecting a redundant communication bus to the slats on the right side of the aircraft connecting a second redundant communication bus to the plurality of devices connected to the slats on the left side of the aircraft, connecting a third redundant communication bus to the plurality of devices connected to flaps on the right side of the aircraft, and connecting a fourth redundant communication bus to the plurality of devices connected to flaps on the left side of the aircraft.

In addition to one or more of the features described above, or as an alternative, further embodiments may include including, in the bus communication circuit, a communication interface configured to interface with the communication bus directly, including, in the bus communication circuit, a signal conditioning circuit configured to process signals between the communication bus and the at least one of a sensor and effector, including, in the bus communication circuit, a power conditioning circuit connected to a power source and configured to draw power to power the buss communication circuit, and including, in the bus communication circuit, a processor communicatively connected to and configured to control the communication interface, signal conditioning circuit, and power conditioning circuit.

According to one embodiment a computer program product for controlling an aircraft using a centralized control system is provided. The computer program product including a computer readable storage medium having program instructions embodied therewith. The program instructions executable by a processor to cause the processor to receive, using a controller, a device signal and transmitting, using the controller, a control signal, transport, using a communication bus connected to the controller, the device signal and the control signal, connect a plurality of devices to the controller using the communication bus, collect, using a sensor in the at least one of the plurality of devices, the device signal, respond to the control signal using an effector, and communicate, using a bus communication circuit in the at least one of the plurality of devices, the device signal and the control signal over the communication bus.

In addition to one or more of the features described above, or as an alternative, further embodiments may include additional program instructions embodied therewith, the additional program instructions executable by a processor to cause the processor to connect the communication bus to the slats on the right side of the aircraft, connect a second communication bus to the plurality of devices connected to the slats on the left side of the aircraft, connect a third communication bus to the plurality of devices connected to flaps on the right side of the aircraft, and connect a fourth communication bus to the plurality of devices connected to flaps on the left side of the aircraft.

In addition to one or more of the features described above, or as an alternative, further embodiments may include additional program instructions embodied therewith, the additional program instructions executable by a processor to cause the processor to include, in the bus communication circuit, a communication interface configured to interface with the communication bus directly, include, in the bus communication circuit, a signal conditioning circuit configured to process signals between the communication bus and the at least one of a sensor and effector, include, in the bus communication circuit, a power conditioning circuit connected to a power source and configured to draw power to power the buss communication circuit, and include, in the bus communication circuit, a processor communicatively connected to and configured to control the communication interface, signal conditioning circuit, and power conditioning circuit.

In addition to one or more of the features described above, or as an alternative, further embodiments may include additional program instructions embodied therewith, the additional program instructions executable by a processor to cause the processor to connect a redundant communication bus to the slats on the right side of the aircraft connect a second redundant communication bus to the plurality of devices connected to the slats on the left side of the aircraft, connect a third redundant communication bus to the plurality of devices connected to flaps on the right side of the aircraft, and connect a fourth redundant communication bus to the plurality of devices connected to flaps on the left side of the aircraft.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The foregoing and other features, and advantages of the present disclosure are apparent from the following detailed description taken in conjunction with the accompanying drawings in which:
FIG. 1 depicts a block diagram of a slat/flap control system.
FIG. 2 depicts a block diagram of a centralized control system in accordance with one or more embodiments of the present disclosure;
FIG. 3 depicts a block diagram of a smart sensor/effector device in accordance with one or more embodiments of the present disclosure;
FIG. 4 depicts a block diagram of a centralized control system for controlling slats and flaps in accordance with one or more embodiments of the present disclosure;
FIG. 5 depicts a block diagram of a redundant centralized control system for controlling slats and flaps that also includes power distribution in accordance with one or more embodiments of the present disclosure; and
FIG. 6 depicts a method of controlling slats and flaps using a centralized control system for controlling the slats and flaps in accordance with one or more embodiments of the present disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

As shown in the Figures SL stands for Slat (Left wing) while SR stands for Slat (Right wing). Further, FL stands for Flap (Left wing) and FR stands for Flap (Right wing). S stands for Sensor, E for Effector, SS for Smart Sensor, and SE for Smart Effector.

In accordance with one or more embodiments, positions of control surfaces are typically controlled by a flight control system via actuators that are coupled to each control surface. For redundancy multiple actuators might be coupled to a given control surface. Further, the flaps and slats actuators may be driven by a central Power Drive Unit (PDU) and mechanical drive trains. Alternatively, the system may comprise individual PDUs for each actuator.

Further, according to one or more embodiments, in systems where a central PDU and associated mechanical drive train is employed to control multiple Slat or Flap surfaces on a wing, a Slat/Flap Controller can be included for the central PDU. Two Slat and two Flap Controllers can also be included for redundancy with each Controller capable of controlling surfaces on both the wings. The Slat/Flap controller can receive commands from a Primary Controller and convert them to the required electrical commands to drive the actuators. It uses inputs from sensors located on each of the Slat or Flap surfaces. These sensors are used to sense the individual surface position, surface skew, or asymmetry between corresponding surfaces on the left and right wings. The sensor types typically include LVDTs, proximity sensors or Resolvers. In addition, the Slat/Flap controller may need to drive effectors (such as brake solenoids) associated with Flaps or Slats. Hence, previously multiple individual wires are run across the length of the wing to carry these sensor and effector signals to the controller. This adds to the complexity of the system installation. Further, these wires are susceptible to electromagnetic and lightning disturbances and need to be shielded. The large number of such wires and cables add to the overall system weight.

Further, systems which use individually driven Flap and Slat PDUs typically rely on multiple individual controllers. In such a case each controller may be located close to its associated actuator, thereby reducing the wire lengths for its sensors and effector signals. However, each distributed controller needs to interface with all the sensors and effectors associated with the given actuator. It thus has a relatively complex architecture comprising of multiple processors and separate Control (CON) and Monitor (MON) lanes. Hence, the use of multiple such distributed PDUs and controllers can increase the overall complexity and weight of the system. So, a need exists for an electrical architecture that can reduce the overall complexity and weight.

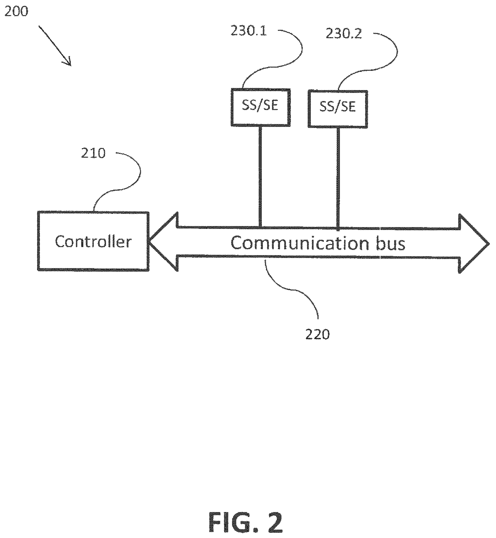

Thus, turning now to FIG.2, FIG. 2 depicts a block diagram of a centralized control system 200 in accordance with one or more embodiments of the present disclosure. The centralized control system 200 includes a controller 210 that is connected to a communication bus 220. Further, the sensors and/or effectors 230.1 and 230.2 are all connected to the communication bus 220. Accordingly, this electrical architecture allows the sensor/effectors to connect to the controller using a single bus. Accordingly, a large initial reduction in wiring can be achieved.

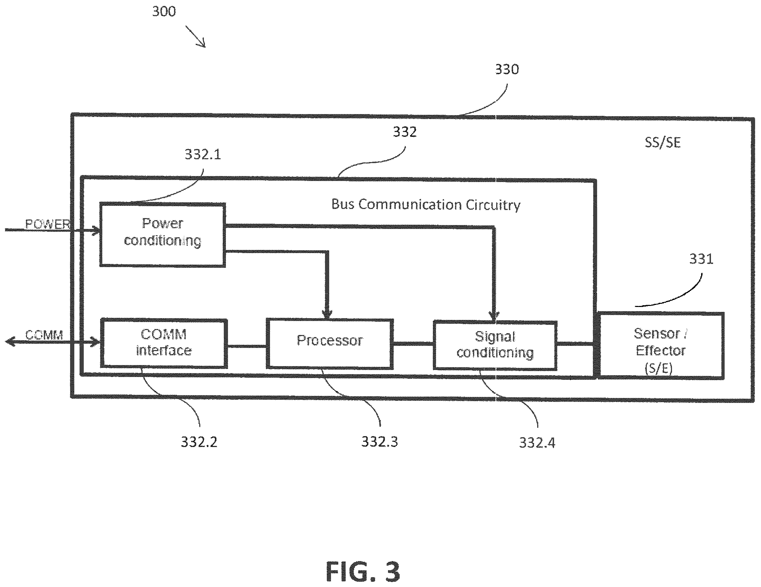

FIG. 3 depicts a block diagram of a smart sensor/effector device 330 in accordance with one or more embodiments of the present disclosure. Further, as shown in FIG. 3, in order to get a sensor and/or effector 331 connected to a communication bus, some additional elements are included to facilitate the bus communication rules. For example, as shown a bus communication circuitry 332 can be included along with the sensor/effector 331 that create a device 300 that can be called a smart sensor/effector 300. Specifically, the device 300 can be packaged into a single housing 330 as shown. Alternatively, according to another embodiment, these elements may remain separate but attached. The bus communication circuitry 332 can specifically include a power conditioning circuit 332.1, a communication interface circuit 332.2, a processor 332.3, and a signal conditioning circuit 332.4. The power conditioning circuit 332.1 draws a required power amount from a power source to power the bus communication circuitry 332 and can also draw power to power the sensor/effector as needed. The communication interface 332.2 can convert signals, help time transmissions, ensure transmission at a defined rate, as well as package data in accordance with the communication bus that is used by all the sensor/effector elements. The signal conditioning circuit 332.4 can, among other processing, do signal processing on both the collected sensor signals as well as un-package the control signals for the effector. The processor 332.3 is provided to control the other elements, coordinate actions, and can also help execute any processes as needed.

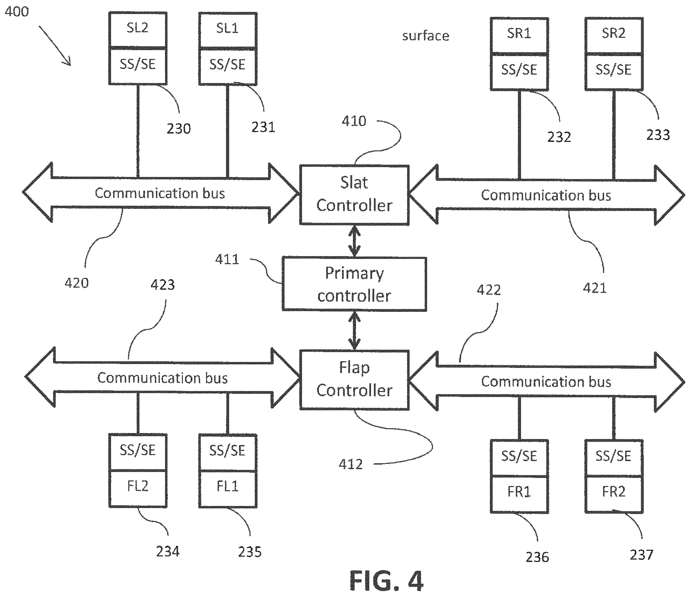

FIG. 4 depicts a block diagram of a centralized control system 400 for controlling slats SR1, SR2, SL1, SL2 and flaps FR1, FR2, FL1, and FL2 in accordance with one or more embodiments of the present disclosure. As shown, this centralized control system 400 does not include any redundant elements. As shown the centralized control system 400 includes a slat controller 410 that controls all the slats using a first communication bus 420 and a second communication bus 421. Specifically, each of the slats SR1, SR2, SL1, and SL2 has a corresponding smart sensor and/or effector 232, 233, 231, 230, respectively. These smart sensor and/or effectors 232, 233, 231, 230 are devices that include not only a sensor and/or effector but also contain bus communication circuitry providing the capability to communicate using a communication bus 420 or 421. Similarly, a flap controller 412 controls all the flaps FR1, FR2, FL1, FL2 which each of a corresponding smart sensor and/or effector 236, 237, 234, and 235, respectively. These smart sensor and/or effector devices 236, 237, 234, and 235 are connected to communication bus 423 or 422 through which they communicate with the flap controller. The smart sensor and/or effector devices 236, 237, 234, and 235 each also contain bus communication circuitry that provides the ability to communicate over the communication buses 423 and 422. Further, the centralized control system 400 includes a primary controller 411 which receives input to control the aircraft surfaces and processes data from the slat and flap controllers 410 and 412.

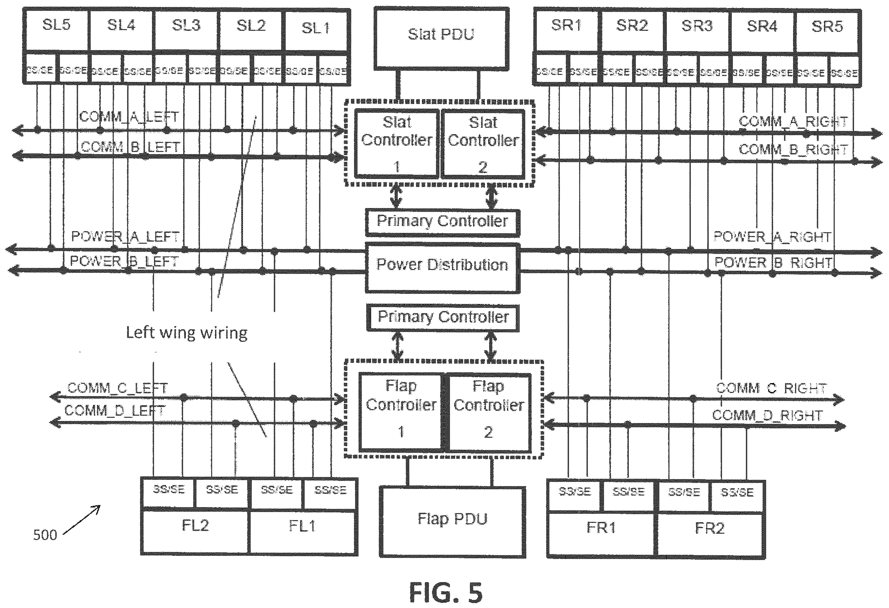

FIG. 5 depicts a block diagram of a redundant centralized control system 500 for controlling slats SR1-SR5 and SL1-SL5 and flaps FR1, FR2, FL1, and FL2 that also includes power distribution in accordance with one or more embodiments of the present disclosure. As shown, the redundant centralized control system 500 includes slat controller 1 and slat controller 2 that are redundantly connected to the slats SR1-SR5 and SL1-SL5 using two communication buses COMM-A_LEFT and COMM_B_LEFT for the left and two communication buses for the right side of the aircraft COMM_A_RIGHT and COMM_B_RIGHT. Similarly the redundant centralized control system 500 includes a flap controller 1 and a flap controller 2 that are redundantly connected to the flaps FR1, FR2, FL1, and FL2 using communication buses COMM_C_LEFT, COMM_D_LEFT, COMM_C_RIGHT, and COMM_D_RIGHT. Further, as shown each of the connections are made through one or a plurality of devices that are connected to each of the slats or flaps. Specifically, each slat or flap has a sensor and/or effector connected thereto. These sensors and/or effectors also include additional bus communication circuitry making them "smart sensor/effector" devices that are able to communicate over a bus as shown. Further, the centralized control system 500 includes a slat PDU and a flap PDU for controlling actuators for moving and controlling the surfaces. Additionally, the centralized control system 500 includes a power distribution element that redundantly connects to all the sensor/effector devices providing power to the sensor/effectors. This plurality of devices is not only provided with power but can also draw additional power as needed for the respective sensor/effector that it is connected to.

Further, according to one or more other embodiments, the system 500 utilizes a central power drive unit and associated mechanical drive train to control multiple Slat or Flap surfaces on a wing. FIG. 5 outlines a simplified electrical architecture for such a system. Two Slat and two Flap Controllers are shown for redundancy with each Controller capable of controlling surfaces on both the wings. The Slat/Flap controller receives commands from a Primary Controller and converts them to the required electrical commands to drive the actuators.

According to one or more embodiments, a distributed control system is provided through the use of smart sensors and effectors (SS/SE) to simplify the wiring and thereby reduce the complexity and weight. The use of a chosen standard multiplexed serial communication bus to interface each smart sensor or effector with the Slat or Flap controller is provided. According to one or more embodiments, the sensors and effectors include position sensors such as LVDTs, Resolvers, proximity sensors, solenoids etc. In accordance with one or more embodiments, any of the commonly used communication buses such as the Controller Area Network (CAN), MIL-STD-1553 or a proprietary bus can be used. The communication bus allows a standardized interface to each smart sensor or smart effector. For redundancy two independent buses are shown in the figure (COMM_A, COMM_B and COMM_C, COMM_D). Similarly, two redundant power supply lines are shown (POWER_A, POWER_B). Typically each control surface will have multiple smart sensors and/or smart effectors. For simplicity two redundant smart sensors/effectors are shown associated with each control surface. Out of these two redundant smart sensors/effectors, one is shown connected to COMM_A (or COMM_C) and POWER_A while the other is shown connected to COMM_B (or COMM_D) and POWER_B.

Further, according to one or more embodiments, the Slat/Flap PDU also includes sensors and effectors such as position sensor, pressure sensor, speed sensor, solenoids etc. In the central PDU driven architecture the Slat/Flap Controller is typically located close to the PDU. Consequently, the wire lengths from the PDU to the Slat/Flap Controller are relatively short. Hence, these sensors and effectors are shown directly interfacing as analog or discrete signals and are not shown connecting to the communication bus. However, if the chosen communication bus has sufficient bandwidth to handle the additional data, then the PDU sensors and effectors can also potentially be interfaced via the communication bus.

In one or more embodiments, all the signal processing, demodulation and detection is done locally within each smart sensor. Hence, only the final processed result from each smart sensor needs to be sent over the communication bus. Similarly, a smart effector only needs to receive the desired position command. This reduces the bandwidth requirement of the bus.

In accordance with one or more embodiments, as an example evaluation of the required bus bandwidth, a communication bus included in a centralized control system can follow the CAN protocol which can work up to 1 Mbps data rate for a bus length of up to 40 meters typically. Note that the calculation below is intended only as an illustration and the numbers will vary based on the chosen communication bus, the number of sensors and effectors etc.

In accordance with one or more embodiments, a minimum size CAN data frame comprises of 52 bits (for a data field of 1 byte). Further, on either the left or right wing, a maximum of 15 smart sensors or effectors are connected to a particular communication bus. For example, a maximum of 15 smart sensors or effectors are connected to COMM_A_LEFT. Also, according to one or more other embodiments, COMM_A_LEFT and COMM_A_RIGHT connect to Slat Controller 1. COMM_B_LEFT and COMM_B_RIGHT connect to Slat Controller 2. Similarly, COMM_C_LEFT and COMM_C_RIGHT connect to Flap Controller 1. COMM_D_LEFT and COMM_D_RIGHT connect to Flap Controller 2. Additionally, each smart sensor (effector) sends its processed output status (receives the effector command) using the minimum size CAN data frame. Further, the Slat / Flap controller can utilize dual lane architecture such that each lane processes data from two CAN buses.

Accordingly, the data on each CAN bus from either wing will comprise of 15 x 52 bits = 780 bits. The total data from both the wings that needs to be processed by each lane will be 2 x 780 bits = 1560 bits. Typically at a data rate of 1Mbps the total time required for transmitting this volume of data is anywhere from .78ms (assuming that the communication buses for the left and right wings (e.g. COMM_A_LEFT & COMM_A_RIGHT) are operating in parallel.) to 1.56ms. A typical software or firmware processing loop cycle time for such control applications can be around 2ms. So, based on the above example the entire sensor and effector data from both right and left wings can be captured /transmitted within one software or firmware loop cycle. The MIL-STD-1553bus can support even higher data rates.

Thus, in accordance with one or more embodiments, data buses (such as CAN, MIL-STD-1553 etc.) are used and provide adequate bandwidth to handle the combined data from the smart sensors and effectors and can be deployed to implement the proposed architecture.

Most modem microcontrollers support a Direct Memory Access (DMA) mechanism such that the external data transfers can be handled independent of the Central Processing Unit (CPU). So, in accordance with another embodiment, the CPU need not remain actively engaged in the data capture process and can continue to process the data captured in a previous cycle while new data is captured simultaneously as a background task.

Smart sensors or effectors require power to operate. A standardized power supply (e.g. 28VDC) along with a redundant supply line can be routed to all the sensors and effectors. Thus, according to one or more embodiments, any additional power supply rails required for operating the internal circuitry needs to be generated locally within the smart sensor or effector.

Many communication buses use two differential wires. So, in accordance with one or more embodiments that include two redundant communication buses and two redundant power supply lines, the proposed architecture can significantly reduce the number of wires running over each wing compared to existing central PDU driven architectures.

The feature that provides for achieving the reduction in the number of wires is additional circuitry that is required for each smart sensor and effector. This additional circuitry is much simpler compared to that required for distributed Controllers used in Systems which use individually driven Flap and Slat PDUs.

In accordance with one or more embodiments, with advances in modern controllers and FPGAs it is possible to achieve a high degree of integration such that the additional circuitry for the smart sensors and effectors can be implemented with a minimal number of components with a lower cost, weight and in a smaller form factor. In addition there is the Non-Recurring Engineering (NRE) development and qualification cost of the software or firmware for the smart sensors and effectors.

In accordance with one or more embodiments, a simplified architecture for a smart sensor or effector is outlined in FIG. 3 as an example. The smart sensor or effector accepts a standardized redundant power input (typ. 28VDC). The 'Power conditioning' circuit provides local filtering and produces internal power rails as required (e.g. 5V / 3.3V for the microcontroller or FPGA, ±15V for signal conditioning etc.).

In accordance with one or more embodiments, for a smart sensor, the 'Signal conditioning' circuit produces the required excitation for the sensor and processes the sensor output signal. This circuit would also include provisions for Built in Test (BIT) and for Fault detection such as 'open circuit' or 'short circuit'.

In accordance with one or more embodiments, for a smart effector, the 'Signal conditioning' circuit produces the required current, voltage or Pulse Width Modulated (PWM) signal to drive the effector. This circuit also includes provisions for Built in Test (BIT) and for Fault detection such as 'open circuit' or 'short circuit'.

The additional circuitry in the smart sensors and effectors is relatively simple compared to that of a distributed controller in a system with independently driven PDUs. It can be implemented with highly integrated microcontrollers or FPGAs and associated surface mount electronic components. With a high level of integration it is possible to house the circuitry and the printed circuit board (PCB) in a small form factor to minimize the weight.

In accordance with one or more embodiments, there can be some possible variations in the architecture shown in FIG. 5. For example, according to an embodiment, dissimilar communication buses can be used to prevent common mode failures from affecting both the buses simultaneously. For example, COMM_A can use a different protocol compared to COMM B.

According to another embodiment, if the chosen communication bus can support the entire data bandwidth for both the Flap and Slat controllers, the buses COMM_A and COMM_B can potentially be the same as COMM_C and COMM_D, which will further reduce the required number of wires.

Multiple combinations exist for interfacing the redundant communication buses to the redundant controllers. Safety considerations and the bandwidth of the chosen bus will dictate the optimum interface for a given aircraft.

In accordance with one or more embodiments, with the distributed architecture, the basic signal processing for each sensor and effector is performed locally within that sensor or effector. Consequently the functions performed by the Slat/Flap Controller are reduced. According to one or more embodiments, if both the Slat and Flap functions can be performed by a single Controller, then only 2 Slat/Flap Controllers may be considered (Slat/Flap Controller 1 and 2). Similarly, according to another embodiment, if the Slat/Flap functions can be performed by the Primary Controller then potentially all 4 Slat/Flap Controllers can be eliminated and the smart sensors and smart effectors can directly interface with the Primary Controller(s).

The Slat/Flap PDU also includes sensors and effectors. According to another embodiment, if the chosen communication bus has sufficient bandwidth to handle the additional data, then the PDU sensors and effectors can also potentially be interfaced via the communication bus.

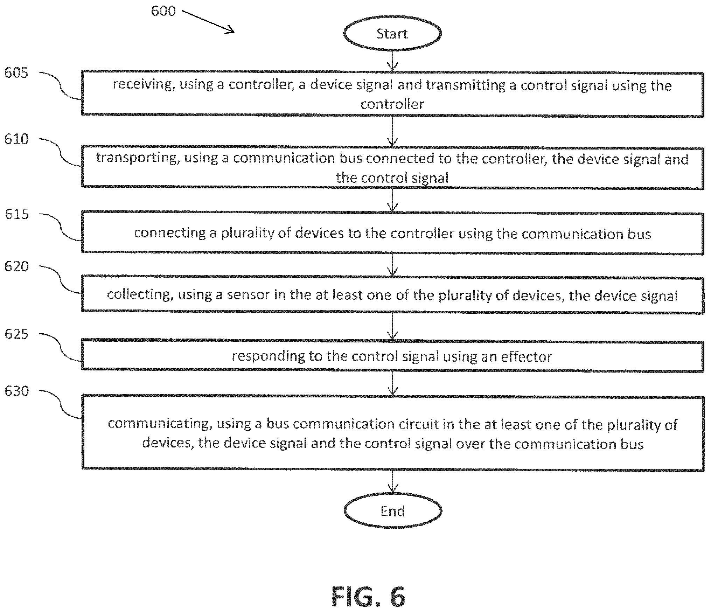

FIG. 6 depicts a method 600 of controlling slats and flaps using a centralized control system in accordance with one or more embodiments of the present disclosure.

The method 600 includes receiving, using a controller, a device signal and transmitting a control signal using the controller (operation 605). The method also includes transporting, using a communication bus connected to the controller, the device signal and the control signal (operation 610). Further, the method 600 includes connecting a plurality of devices to the controller using the communication bus (operation 615) and collecting, using a sensor in the at least one of the plurality of devices, the device signal (operation 620). The method 600 also includes responding to the control signal using an effector (operation 625) and communicating, using a bus communication circuit in the at least one of the plurality of devices, the device signal and the control signal over the communication bus to the controller (operation 630).

The commonly used electrical architecture for Slat/Flap control based on a central PDU requires multiple wires routed over the wings. This adds to the complexity of the system installation. These wires are susceptible to electromagnetic and lightning disturbances and need to be shielded. The large number of such wires and cables add to the overall system weight.

The alternative architecture which uses individually driven PDUs for each actuator can reduce the length of the wires. However, each distributed controller needs to interface with all the sensors and effectors associated with the given actuator. It has a relatively complex architecture comprising of multiple processors and separate Control (CON) and Monitor (MON) lanes. Hence, the use of multiple such distributed PDUs and controllers can increase the overall complexity and weight of the system.

One or more embodiments as disclosed herein provided the use of smart sensors and effectors which can be interfaced to the central PDU using a multiplexed serial communication bus. Commonly used serial buses such as MIL-STD-1553bor CAN support a data rate which is sufficient to accommodate the combined data from the sensors and effectors on both the wings. Assuming a redundant pair of communication buses and two redundant power supply lines, the number of wires required over each wing for Slat/Flap control can be significantly reduced.

The additional circuitry required for the smart sensors and effectors is relatively simple and can be implemented with a highly integrated processor and associated surface mount electronic components. With a high level of integration it is possible to house the circuitry and the printed circuit board (PCB) in a small form factor to minimize the weight. Hence, the proposed electrical architecture in accordance with one or more embodiments can yield a reduction in overall weight of the system.

Among other benefits, the sensor and effector interfaces become simpler due to the reduced wire length between the sensors or effectors and the signal processing electronic circuitry. This can yield improved accuracy in signal conditioning and detection. The reduced number of wires running over the wings and use of differential communication buses minimizes the electromagnetic interference. Also, the lightning protection for the central Slat/Flap controller becomes simplified since only the power and communication buses need to be protected.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Accordingly, the present disclosure is not to be seen as limited by the foregoing description, but is only limited by the scope of the appended claims.

## Claims

1. A centralized control system (400) for controlling an aircraft, the centralized control system comprising:
a controller (411) configured to receive a device signal and transmit a control signal;
a communication bus (422, 423) connected to the controller being configured to transport the device signal and the control signal;
a plurality of devices connected to the controller (411) using the communication bus (422, 423), wherein at least one of the plurality of devices comprises:
at least one of a sensor (234, 235, 236, 237) being configured to collect the device signal and an effector configured to respond to the control signal; and
a bus communication circuit (422, 423) configured to communicate over the communication bus to the controller.

2. The centralized control system of claim 1, wherein the controller further comprises:
a slat controller configured to control the plurality of devices that are connected to a plurality of slats;
a flap controller configured to control the plurality of devices that are connected to a plurality of flaps; and
a primary controller configured to receive user control signals for controlling the aircraft.

3. The centralized control system of claim 1, wherein the controller further comprises:
a first slat controller configured to control the plurality of devices that are connected to a plurality of slats on the left side of the aircraft;
a first flap controller configured to control the plurality of devices that are connected to a plurality of flaps on the left side of the aircraft;
a second slat controller configured to control the plurality of devices that are connected to a plurality of slats on the right side of the aircraft;
a second flap controller configured to control the plurality of devices that are connected to a plurality of flaps on the right side of the aircraft; and
a primary controller configured to receive user control signals for controlling the aircraft.

4. The centralized control system of claim 1,
wherein the communication bus is connected to the slats on the right side of the aircraft, and
wherein the centralized control system further comprises:
a second communication bus connected to the plurality of devices connected to the slats on the left side of the aircraft;
a third communication bus connected to the plurality of devices connected to flaps on the right side of the aircraft; and
a fourth communication bus connected to the plurality of devices connected to flaps on the left side of the aircraft.

5. The centralized control system of claim 4, further comprises:
a redundant communication bus connected to the slats on the right side of the aircraft;
a second redundant communication bus connected to the plurality of devices connected to the slats on the left side of the aircraft;
a third redundant communication bus connected to the plurality of devices connected to flaps on the right side of the aircraft; and
a fourth redundant communication bus connected to the plurality of devices connected to flaps on the left side of the aircraft.

6. The centralized control system of claim 1, wherein the bus communication circuit of the at least one of the plurality of devices further comprises:
a communication interface configured to interface with the communication bus directly;
a signal conditioning circuit configured to process signals between the communication bus and the at least one of a sensor and effector;
a power conditioning circuit connected to a power source and configured to draw power to power the buss communication circuit; and
a processor communicatively connected to and configured to control the communication interface, signal conditioning circuit, and power conditioning circuit.

7. The centralized control system of any preceding claim, further comprising:
a power distribution device comprising:
a left power line that is connected to the plurality of devices connected to flaps and slats on the left side of the aircraft; and
a right power line that is connected to the plurality of devices connected to flaps and slats on the right side of the aircraft.

8. The centralized control system of claim 7, the power distribution device further comprising:
a redundant left power line that is connected to the plurality of devices connected to flaps and slats on the left side of the aircraft; and
a redundant right power line that is connected to the plurality of devices connected to flaps and slats on the right side of the aircraft.

9. The centralized control system of claim 1, further comprising:
a slat power drive unit (PDU) communicatively connected to the controller; and
a flap PDU communicatively connected to the controller.

10. The centralized control system of claim 3,
wherein the primary controller is split between a front primary controller and a back primary controller,
wherein the front primary controller is configured to receive user control signals for controlling the slats and the plurality of devices connected to the slats, and
wherein the back primary controller is configured to receive user control signals for controlling the flaps and the plurality of devices connected to the flaps.

11. A method (600) of implementing a centralized control system for controlling an aircraft, the method comprising:
receiving (605), using a controller, a device signal and transmitting a control signal using the controller;
transporting (610), using a communication bus connected to the controller, the device signal and the control signal;
connecting (615) a plurality of devices to the controller using the communication bus;
collecting (620), using a sensor in the at least one of the plurality of devices, the device signal;
responding (625) to the control signal using an effector; and
communicating (630), using a bus communication circuit in the at least one of the plurality of devices, the device signal and the control signal over the communication bus.

12. The method of claim 11, further comprising:
controlling, using a slat controller the plurality of devices that are connected to a plurality of slats;
controlling, using a flap controller, the plurality of devices that are connected to a plurality of flaps; and
receiving, using a primary controller, user control signals for controlling the aircraft.

13. The method of claim 11, further comprising:
controlling, using a first slat controller, the plurality of devices that are connected to a plurality of slats on the left side of the aircraft;
controlling, using a first flap controller, the plurality of devices that are connected to a plurality of flaps on the left side of the aircraft;
controlling, using a second slat controller, the plurality of devices that are connected to a plurality of slats on the right side of the aircraft;
controlling, using a second flap controller, the plurality of devices that are connected to a plurality of flaps on the right side of the aircraft; and
receiving, using a primary controller, user control signals for controlling the aircraft.

14. The method of claim 11, further comprising,
connecting the communication bus to the slats on the right side of the aircraft;
connecting a second communication bus to the plurality of devices connected to the slats on the left side of the aircraft;
connecting a third communication bus to the plurality of devices connected to flaps on the right side of the aircraft; and
connecting a fourth communication bus to the plurality of devices connected to flaps on the left side of the aircraft.

15. The method of claim 14, further comprising:
connecting a redundant communication bus to the slats on the right side of the aircraft:
connecting a second redundant communication bus to the plurality of devices connected to the slats on the left side of the aircraft;
connecting a third redundant communication bus to the plurality of devices connected to flaps on the right side of the aircraft; and
connecting a fourth redundant communication bus to the plurality of devices connected to flaps on the left side of the aircraft.
